# EUROPEAN PATENT APPLICATION

(11) **EP 4 332 866 A1**
(43) Date of publication of application: **06.03.2024**
(21) Application number: 23184435.8
(22) Date of filing: 10.07.2023
(51) Int. Cl.: G06Q 30/0201

(54) **METHOD, DEVICE AND STORAGE MEDIUM FOR PROCESSING TARGET TRACK**

(30) Priority: 30.08.2022 CN 202211048484
(71) Applicant: FUJITSU LIMITED, Kawasaki-shi, Kanagawa 211-8588 (JP)
(72) Inventor: WANG, Liuan, Beijing, 100027 (CN); ZHANG, Huigang, Beijing, 100027 (CN); WANG, Ping, Beijing, 100027 (CN); SUN, Jun, Beijing, 100027 (CN)
(74) Representative: Hoffmann Eitle

(57) **Abstract**

The disclosure relates to a method, device and storage medium for processing a target track. According to an embodiment, the method comprises: determining a candidate customer track set of a receipt data group corresponding to one of a plurality of shopping receipts; counting, for each track, the number of sold items matching the track in location in a sold item set indicated by the receipt data group, as a first location matching count of the track; counting, for each track, the number of sold items matching track points of interest in a set of track points of interest of the track in location in the sold item set, as a second location matching count of the track; and determining a customer track corresponding to the receipt data group based on first location matching counts and second location matching counts of a plurality of tracks in the candidate customer track set.

## Description

### CROSS-REFERENCE TO RELATED APPLICATIONS

This application claims the priority benefit of Chinese Patent Application No. 202211048484.8, filed on August 30, 2022 in the China National Intellectual Property Administration, the disclosure of which is incorporated herein in its entirety by reference.

### FIELD OF THE INVENTION

The present disclosure relates generally to information processing and computer vision, and more particularly, to a method, a device and a storage medium for processing a target track in target tracking.

### BACKGROUND OF THE INVENTION

With the development of computer science and artificial intelligence, computer vision technology has gained further development. Computer vision technology includes target tracking technology for target tracking of an image sequence (video) captured by a camera. Target tracking can detect targets of multiple types of interest such as pedestrians, automobiles or/or animals in a video and assign identifications (IDs) according to the targets, so as to obtain tracks of different targets. An ideal tracking result is that: tracks of different targets are identified as corresponding different IDs, and multiple segments of tracks of the same target are identified with the same ID. According to the number of cameras as used, target tracking can be divided into multi-camera multi-target tracking and single-camera multi-target tracking. In order to obtain a reliable monitoring effect, multiple-camera target tracking is usually used for a large space. Target tracking can be realized utilizing a target tracking model.

In multi-target tracking, for an input video, a tracking result of targets is output. In a tracking result image, each target is indicated by, for example, a rectangular bounding box with a corresponding ID identification. In an image sequence of multiple frames of the video, a moving track of a bounding box of the same ID can be regarded as a track of a target of the ID. In these multiple frames, an image block sequence of multiple image blocks indicated by the bounding box of the ID is referred to as a tracklet (tracklet). In a tracklet, each image block therein can be regarded as a frame of image of the tracklet, and each frame of image can be allocated with information representing time information and spatial location information of a target track. In other words, a track point on the target track can have a location attribute, a time attribute, and a re-recognition feature representing a target feature in the image block. The location attribute can be used to represent a location of a target in a real space (e.g., coordinates of a target in a two-dimensional projection plane of a real space). The time attribute can be used to indicate a shooting time of an image captured by a corresponding camera. The re-recognition feature can be used to identify a target.

Generally, an offline sales venue is equipped with one or more monitoring cameras. It could be understood that it is possible to obtain a track of a selected target in a sales venue with a target tracking model. Considering factors such as occlusion (e.g., occlusion of customers by shelves and items), light, personnel density and the like, a target tracking effect for customers in an offline sales venue may be limited. For example, multiple tracks of nominal multiple customers given by a tracking model are actually tracks of the same customer, or, multiple segments of a track of the same customer are not continuous in time. Also, when a customer in a sales venue checks out, shopping receipt data will be generated, and a merchant will provide a shopping receipt containing the shopping receipt data to the customer. The shopping receipt data contains information such as a list of items purchased by the customer, a checkout time and the like. In usual cases, a target tracking model or a target tracking method cannot indicate to which target (customer) track a shopping receipt data group corresponding to a shopping receipt corresponds, that is, cannot associate a shopping receipt data group of a certain customer with a corresponding track of that customer.

### SUMMARY OF THE INVENTION

A brief summary of the present disclosure will be given below to provide a basic understanding of some aspects of the present disclosure. It should be understood that the summary is not an exhaustive summary of the present disclosure. It does not intend to define a key or important part of the present disclosure, nor does it intend to limit the scope of the present disclosure. The object of the summary is only to briefly present some concepts, which serves as a preamble of the detailed description that follows.

It is desirable to determine a shopping receipt data group corresponding to the same customer and a matching track thereof. Having studied a shopping receipt and target tracking in an offline sales venue, the inventor conceived the technical solution of the present disclosure. The technical problems to be solved by embodiments of the present disclosure include, but are not limited to, at least one of: determining a corresponding customer track matching a shopping receipt data group; and, improving the accuracy of target tracking.

According to an aspect of the present disclosure, there is provided a method of processing a target track in target tracking, comprising: determining a candidate customer track set of a receipt data group corresponding to one of a plurality of shopping receipts; counting, for each track in the candidate customer track set, the number of sold items matching the track in location in a sold item set indicated by the receipt data group, as a first location matching count of the track; counting, for each track in the candidate customer track set, the number of sold items matching track points of interest in a set of track points of interest of the track in location in the sold item set, as a second location matching count of the track; and determining a customer track corresponding to the receipt data group in the candidate customer track set based on first location matching counts and second location matching counts of a plurality of tracks in the candidate customer track set; wherein a track point of interest included in the set of track points of interest of each track in the candidate customer track set is a track point indicating a location where a corresponding customer of the track shows interest in an item for sale displayed in an offline sales venue.

According to another aspect of the present disclosure, there is provided a device for multi-target multi-camera tracking. The device comprises: a memory storing instructions; and at least one processor configured to execute the instructions to: determine a candidate customer track set of a receipt data group corresponding to one of a plurality of shopping receipts; count, for each track in the candidate customer track set, the number of sold items matching the track in location in a sold item set indicated by the receipt data group, as a first location matching count of the track; count, for each track in the candidate customer track set, the number of sold items matching track points of interest in a set of track points of interest of the track in location in the sold item set, as a second location matching count of the track; and determine customer tracks corresponding to the receipt data group in the candidate customer track set based on first location matching counts and second location matching counts of a plurality of tracks in the candidate customer track set; wherein a track point of interest included in the set of track points of interest of each track in the candidate customer track set is a track point indicating a location where a corresponding customer of the track shows interest in an item for sale displayed in an offline sales venue.

According to still another aspect of the present disclosure, there is provided anon-transitory computer-readable storage medium storing a program. When the program is executed by a computer, the computer implements the operations of: determining a candidate customer track set of a receipt data group corresponding to one of a plurality of shopping receipts; counting, for each track in the candidate customer track set, the number of sold items matching the track in location in a sold item set indicated by the receipt data group, as a first location matching count of the track; counting, for each track in the candidate customer track set, the number of sold items matching track points of interest in a set of track points of interest of the track in location in the sold item set, as a second location matching count of the track; and determining a customer track corresponding to the receipt data group in the candidate customer track set based on first location matching counts and second location matching counts of a plurality of tracks in the candidate customer track set; wherein a track point of interest included in the set of track points of interest of each track in the candidate customer track set is a track point indicating a location where a corresponding customer of the track shows interest in an item for sale displayed in an offline sales venue.

The beneficial effects of the methods, devices and storage media of the present disclosure include at least of: determining a customer track matching a shopping receipt data group; and, improving the accuracy of target tracking.

### BRIEF DESCRIPTION OF THE DRAWINGS

Embodiments of the present disclosure will be described below with reference to the accompanying drawings, which will help to more easily understand the above and other objects, features and advantages of the present disclosure. The accompanying drawings are merely intended to illustrate the principles of the present disclosure. The sizes and relative positions of units are not necessarily drawn to scale in the accompanying drawings. The same reference numbers may denote the same features. In the accompanying drawings:
Figure 1 illustrates a plane sketch of an offline sales venue including an exemplary customer track;
Figure 2 illustrates an exemplary flowchart of a method for processing a target track in target tracking according to an embodiment of the present disclosure;
Figure 3 illustrates an exemplary flowchart of determining a first location matching count according to an embodiment of the present disclosure;
Figure 4 illustrates an exemplary flowchart of determining a second location matching count according to an embodiment of the present disclosure;
Figure 5 illustrates an exemplary flowchart of a customer track correction operation according to an embodiment of the present disclosure;
Figure 6 illustrates an exemplary block diagram of a device for processing a target track in target tracking according to an embodiment of the present disclosure;
Figure 7 is an exemplary block diagram of a device for processing a target track in target tracking according to another embodiment of the present disclosure; and
Figure 8 is an exemplary block diagram of an information processing apparatus according to an embodiment of the present disclosure.

### DETAILED DESCRIPTION OF THE INVENTION

Hereinafter, exemplary embodiments of the present disclosure will be described combined with the accompanying drawings. For the sake of clarity and conciseness, the specification does not describe all features of actual embodiments. However, it should be understood that many decisions specific to the embodiments may be made in developing any such actual embodiment, so as to achieve specific objects of a developer, and these decisions may vary as embodiments are different.

It should also be noted herein that, to avoid the present disclosure from being obscured due to unnecessary details, only those device structures closely related to the solution according to the present disclosure are shown in the accompanying drawings, while other details not closely related to the present disclosure are omitted.

It should be understood that, the present disclosure will not be limited only to the described embodiments due to the following description with reference to the accompanying drawings. Herein, where feasible, embodiments may be combined with each other, features may be substituted or borrowed between different embodiments, and one or more features may be omitted in one embodiment.

Computer program code for performing operations of various aspects of embodiments of the present disclosure can be written in any combination of one or more programming languages, the programming languages including object-oriented programming languages, such as Java, Smalltalk, C++ and the like, and further including conventional procedural programming languages, such as "C" programming language or similar programming languages.

Methods of the present disclosure can be implemented by circuitry having corresponding functional configurations. The circuitry includes circuitry for a processor.

An aspect of the present disclosure relates to a method of processing a target track in target tracking. The method can be implemented by a computer. The method relates to matching of a shopping receipt with a customer track for an offline sales venue.

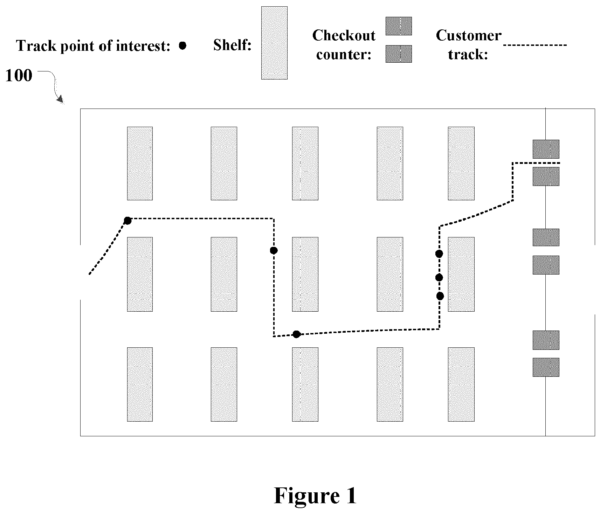

Before the method is described, some concepts involved in the method will be described first. An offline sales venue involved in the present disclosure will be described below. Figure 1 illustrates a plane sketch of an offline sales venue 100 including an exemplary customer track. As illustrated in Figure 1, a plurality of shelves for displaying items for sale and a plurality of checkout counters are arranged in the offline sales venue 100. A customer browses items, selects items and checks out in the offline sales venue 100, so as to generate a corresponding customer track, wherein at some track points, the customer shows interest in items in sight, such track points may be referred to as track points of interest; and the customer may end up buying more than one item. The customer track can be obtained using a target tracking model based on videos provided by a plurality of cameras arranged in the offline sales venue 100, wherein the model can convert coordinates of a target (customer) in an image to world coordinates (i.e., coordinates of the target in the offline sales venue 100), so as to determine location attribute information of track points on the track under the world coordinates. A location where items are located on a shelf is known, and can be represented by two-dimensional coordinates or a two-dimensional area. It should be noted that, due to technical limitations, it is not necessary that the target tracking model can identify a complete track of a customer in an offline sales venue, it is possible that the target tracking model identifies only a plurality of partial segments of a real customer track as shown in the figure, and it is not necessary that these segments have been assigned with the same customer ID. The target tracking model usually will not output to which shopping receipt a certain customer track corresponds, either. Similarly, a terminal that generates a shopping receipt usually cannot output to which target tracking track a current shopping receipt corresponds, either. Determining a customer track corresponding to a shopping receipt (i.e., determining a matching customer track of shopping data) is conducive to obtaining some beneficial information (e.g., customer preferences, items of concern). Upon analysis, the inventor realized that a shopping receipt is also beneficial to obtaining a more complete customer track, which is conducive to improving the accuracy of target tracking.

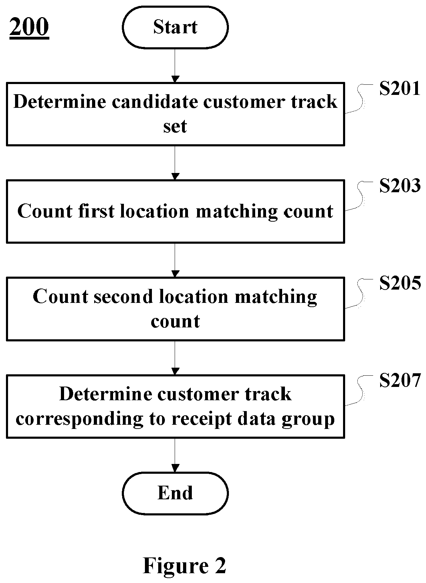

Figure 2 illustrates an exemplary flowchart of a method 200 of processing a target track in target tracking according to an embodiment of the present disclosure.

In operation S201, a candidate customer track set cTrs: cTr[ciStart]to cTr[ciEnd])of a receipt data group rdG[i] corresponding to one R[i] of a plurality of shopping receipts is determined. An exemplary customer track in the candidate customer track set cTrs can be represented as cTr[ci].

The candidate customer track set can be selected from a customer track set provided by a target tracking model. Items for sale are displayed in an offline sales venue. A customer selects and buys items in the sales venue. One or more cameras equipped in the offline sales venue can capture real-time images (videos) of corresponding areas in the sales venue. A real-time image sequence within a period of time is provided to the target tracking model, and after processing the image sequence, the target tracking model can determine a customer track set Trs : Tr[nStart] to Tr[nEnd]including customer tracks in the offline sales venue. A customer track of a customer given by the target tracking model may comprise a plurality of track segments determined based on a plurality of image sequences provided by a plurality of cameras.

The target tracking model can be a multi-target tracking model for a single camera. The target tracking model can also be a multi-camera multi-target tracking model. The multi-camera multi-target tracking model is preferably used. Each of a plurality of cameras (Cams: Cam[kStart] to Cam[kEnd]) can be used to capture images in a space near a corresponding shelf. An image sequence provided by a camera Cam[k] can be marked as imSq[k]. A local target track set of the camera Cam[k] is determined through single-camera multi-target tracking based on the image sequence imSq[k]. The union of a local target track set of each camera constitutes an overall local target track set. A global target track set for the plurality of cameras is determined, as the customer track set of the customer tracks in the offline sales venue, by performing multi-camera multi-target matching for the overall local target track set.

The shopping receipt is, for example, a shopping receipt provided by a merchant to a customer when the customer checks out. The shopping receipt contains a plurality of pieces of data, which constitute a receipt data group. The merchant's checkout terminal or server for checkouts can provide a plurality of historical receipt data groups corresponding to a plurality of customers. The checkouts occur at checkout counters in offline sales venues, for example. The number of checkout counters in one offline sales venue can be at least one, preferably multiple.

The receipt data group comprises electronic-point-of-sale data provided by an electronic point of sale (ePOS: electronic point of sale) system, for example.

The receipt data group comprises an item name list itList[i] that indicates purchased items of a customer and purchase time information, for example. The item name list itList[i] comprises a plurality of item names (Item[imStart] to Item[imEnd]) that indicate a plurality of items in a sold item set, for example. The receipt data group can comprise checkout counter information that indicates a checkout counter of a customer, for example, and for example comprise a serial number or a name of a checkout counter of a customer Cu[i].

In an example, after a customer track set Trs comprising customer tracks in the offline sales venue is determined using a target tracking model, it is possible to determine the candidate customer track set cTrs from the customer track set Trs based on the purchase time information included in the receipt data group rdG[i]. For example, all customer tracks of that day with track end times being before a checkout time indicated by the purchase time information are selected as elements in the candidate customer track cTrs.

In an example, a customer track set comprising customer tracks in the offline sales venue is determined using a target tracking model; and the candidate customer track set is determined from the customer track set based on the purchase time information included in the receipt data group. For example, tracks passing through a specific checkout counter among all customer tracks of that day with track end times being before a checkout time indicated by the purchase time information are selected as elements in the candidate customer track cTrs, the specific checkout counter being a checkout counter indicated by the checkout counter information included in the receipt data group rdG[i].

In operation S203, for each track in the candidate customer track set, the number of sold items matching the track in location in a sold item set Items (i.e., {Item[imStart],······, Item[imEnd]}) indicated by the receipt data group is counted as a first location matching count Ct1 of the track. For example, if the sold item set Items of the receipt data group rdG[i] contains 11 items, wherein 6 items match the candidate customer track cTr[cj] in location, a first location matching count of the candidate customer track cTr[cj] is cTr[cj].Ct1=6. Through the operation of the operation, a first location matching count of each candidate customer track can be obtained.

In operation S205, for each track in the candidate customer track set, the number of sold items matching track points of interest in a set of track points of interest of the track in location in the sold item set Items is counted as a second location matching count Ct2 of the track. For example, if the sold item set Items of the receipt data group rdG[i] contains 11 items, wherein 3 items match track points in a set itPs of track points of interest of the candidate customer track cTr[cj] in location, a second location matching count of the candidate customer track cTr[cj] is cTr[cj].Ct2=3. A track point of interest included in the set of track points of interest of each track in the candidate customer track set is a track point indicating a location where a corresponding customer of the track shows interest in an item for sale displayed in an offline sales venue. That is, a track point of interest on a track is a track point on the track, at a location of which a customer shows interest in an item for sale displayed in an offline sales venue. Through the operation, a second location matching count of each candidate customer track can be obtained.

In operation S207, a customer track corresponding to the receipt data group in the candidate customer track set is determined based on first location matching counts and second location matching counts of a plurality of tracks in the candidate customer track set cTrs.

It could be understood that, it is possible to implement the method 200 for a receipt data group of each of a plurality of shopping receipts, so as to determine a matching customer track of each receipt data group.

According to the above description, it could be understood that the method 200 can determine a matching (corresponding) customer track of a shopping receipt.

In an embodiment, when at least one of the following conditions is satisfied, a track point on a track in the candidate customer track set is regarded as a track point of interest on the track:
Condition 1: a residence time length associated with the track point is greater than a first predetermined time length threshold tTh1; and
Condition 2: a corresponding tracking image of the track point indicates that a customer associated with the track point has a motion of reaching out to the item for sale displayed in the offline sales venue.

A track point on the candidate customer track has a location attribute that indicates a two-dimensional projection location of a customer in an offline sales venue when the customer is at the track point. The two-dimensional projection location can be represented by two-dimensional coordinates (x, y). The track point has a residence time length attribute, for example, and a residence time length tL indicates a length of time for which the customer resides at the track point. The residence time length can be given by the target tracking model or be obtained according to a tracklet for a target which is given by the target tracking model. The first predetermined time length tTh1 is 5 seconds, for example.

Monitoring whether a customer has a motion of reaching out to the item for sale displayed in the offline sales venue in an image can be given by a motion recognition model.

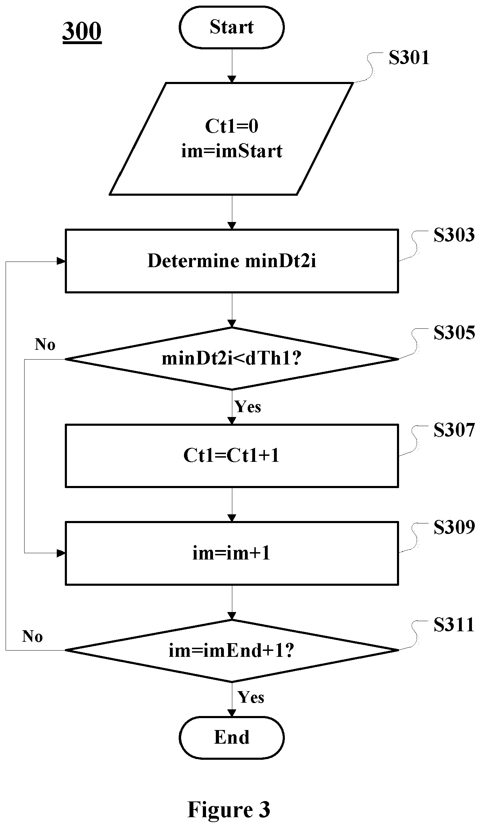

The first location matching count will be further described below. In an embodiment, for each track in the candidate customer track set, when a minimum distance from the track to a display area of an item in the sold item set indicated by the receipt data group is less than a first distance threshold dTh1 (that is, the item matches the track with the distance being less than the first distance threshold in location), the first location matching count of the track is increased by 1. For example, for the candidate customer track cTr[cj], items among a plurality of items Item[imStart] to Item[imEnd] contained in a current receipt data group rdG[i] are traversed to determine a minimum distance minDt2i from the track cTr[cj] to a display area of a current item Item[im], wherein if minDt2i<dTh1, Ct1=Ct1+1, otherwise im=im+1, so as to determine whether a minimum distance minDt2i from a next item to the track is less than dTh1 and whether Ct1 is increased by 1. The flowchart of the exemplary method 300 of determining the first location matching count is as illustrated in Figure 3. For the candidate customer track cTr[cj], in operation S301, Ct1 is initialized to 0, and a loop variable im is initialized to imStart. In operation S303, a minimum distance minDt2i from a display area of an item Item[im]to the track cTr[cj]is determined. In operation S305, it is determined whether the minimum distance minDt2i is less than the first distance threshold dTh1. In operation S307, Ct1 is increased by 1. In operation S309, the loop variable im is increased by 1. In operation S311, it is determined whether im is equal to imEnd+1. Wherein, the display area of the item is known, and is projected to a two-dimensional layout plane of the offline sales venue; and the minimum distance is a two-dimensional Euclidean distance. In an example, it is possible to represent a display area of an item by two-dimensional coordinates of a representative point of the display area of the item so as to conveniently calculate distances Dt2i from the display area of the item Item[im]to the track points on the track cTr[cj], thereby finding a minimum distance among a plurality of distances Dt2i for a plurality of track points on a track, as a minimum distance minDt2i from the track to a display area of an item in the sold item set indicated by the receipt data group. In an example, it is possible to downsample the track points on the track cTr[cj] at fixed time intervals (to reduce the amount of calculation), and to calculate distances Dt2i for track points in a resulting downsampled track point set, so as to determine a minimum distance minDt2i.

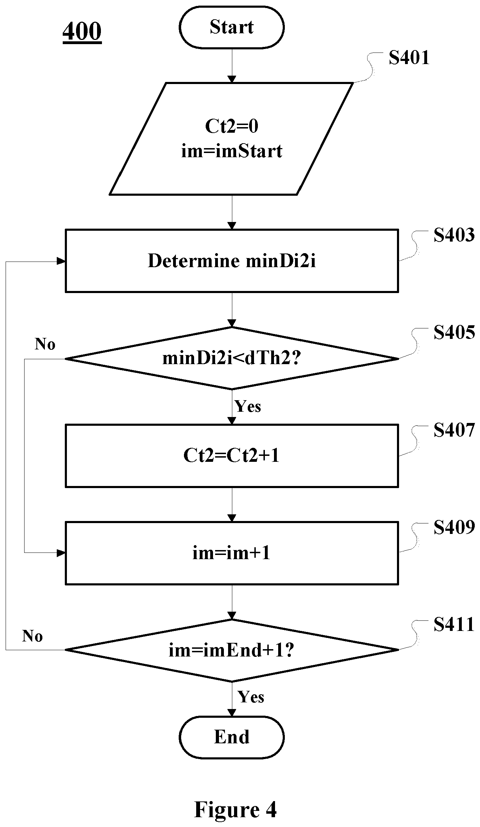

The second location matching count will be further described below. In an embodiment, for each track in the candidate customer track set, when a minimum distance among distances from track points of interest in the set of track points of interest of the track to a display area of one of sold items in the sold item set is less than a second distance threshold dTh2 (that is, the item matches the track points of interest with the distances being less than the second distance threshold in location), the second location matching count of the track is increased by 1. For example, for the candidate customer track cTr[cj], items among a plurality of items Item[imStart] to Item[imEnd] contained in a current receipt data group rdG[i] are traversed to determine a minimum distance minDi2i from track points (inP[inStart]to inP[inEnd])in the set of track points of interest of the track cTr[cj] to a display area of a current item Item[im], wherein if minDi2i<dTh1, Ct2=Ct2+1, otherwise im=im+1, so as to determine whether a minimum distance minDi2i from a next item to the track points in the set of track points of interest is less than dTh2 and whether Ct2 is increased by 1. The flowchart of the exemplary method 400 of determining the second location matching count is as illustrated in Figure 4. For the candidate customer track cTr[cj], in operation S401, Ct2 is initialized to 0, and a loop variable im is initialized to imStart. In operation S403, a minimum distance minDi2i from a display area of an item Item[im] to the track points (inP[inStart]to inP[inEnd])in the set of track points of interest of the track cTr[cj]is determined. In operation S405, it is determined whether the minimum distance minDi2i is less than the first distance threshold dTh2. In operation S407, Ct2 is increased by 1. In operation S409, the loop variable im is increased by 1. In operation S411, it is determined whether im is equal toimEnd+1. Wherein, the display area of the item is known, and is projected to a two-dimensional layout plane of the offline sales venue; and the minimum distance is a two-dimensional Euclidean distance. In an example, it is possible to represent a display area of an item by two-dimensional coordinates of a representative point of the display area of the item so as to conveniently calculate distances Di2i from the display area of the item Item[im]to the track points of interest on the track cTr[cj], thereby finding a minimum distance minDi2i among a corresponding plurality of distances Di2i of a plurality of tracks of interest. In an example, the first distance threshold dTh1 is equal to second distance threshold dTh2.

In some offline sales venues, a customer can directly scan and purchase a commodity by self-service after viewing the commodity and determining to purchase it, that is, the customer can purchase each item in real time by self-service. In this case, the receipt data group can further comprise a corresponding real-time checkout time when the customer purchases each item in real time by self-service. In consideration of this case, in an embodiment, in counting the first location matching count, for a track point on the track which matches a sold item indicated by the receipt data group in location, the track point satisfies: a real-time checkout time of the sold item matches a residence time period of the track point; and, in counting the second location matching count, for a track point of interest in the set of track points of interest of the track which matches a sold item indicated by the receipt data group in location, the track point of interest satisfies: a real-time checkout time of the sold item matches a residence time period of the track point of interest. That is, for a track point counted into the first location matching count or the second location matching count, it not only should satisfy a distance threshold requirement in terms of planar distance but also should satisfy time matching in terms of time (for example, a real-time checkout time is within a residence time period of the track point, or, an absolute value of a difference between a real-time checkout time and a representative time of a residence time period of the track point is within a predetermined time difference threshold). In an example, the residence time period of the track point is represented by a representative time of the track point; and the residence time period of the track point of interest is represented by a representative time of the track point of interest. Further, in an example, in counting the first location matching count, for a track point on the track which matches a sold item indicated by the receipt data group in location, the track point satisfies: an absolute value of a difference between a real-time checkout time of the sold item and a representative time of the track point is less than a second predetermined time length threshold tTh2; and, in counting the second location matching count, for a track point of interest in the set of track points of interest of the track which matches a sold item indicated by the receipt data group in location, the track point of interest satisfies: an absolute value of a difference between a real-time checkout time of the sold item and a representative time of the track point of interest is less than the second predetermined time length threshold.

In an embodiment, determining a customer track corresponding to the receipt data group in the candidate customer track set based on first location matching counts and second location matching counts of a plurality of tracks in the candidate customer track set comprises: determining a weighted sum of a first location matching count and a second location matching count for each track in the candidate customer track set, i.e., c1^{∗}Ct2+c2^{∗}Ct2, where c1, c2 are weighting coefficients, and c1+c2=1 can be defined; determining a maximum weighted sum of all weighted sums; and determining a corresponding track corresponding to the maximum weighted sum as a portion of the customer track corresponding to the receipt data group.

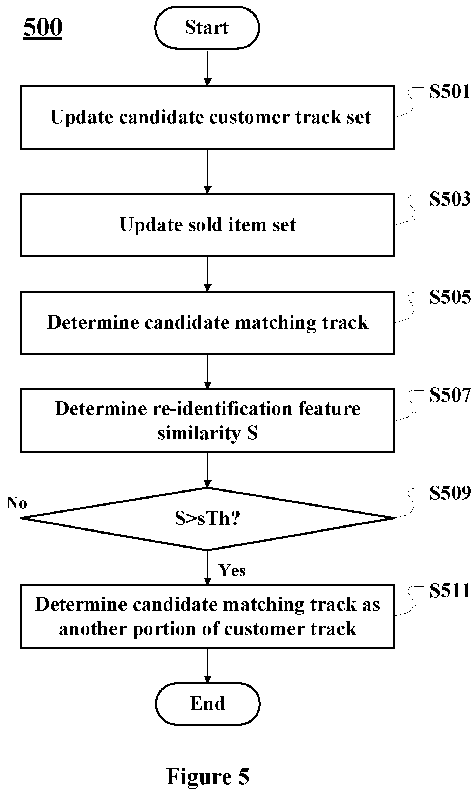

In an embodiment, considering that the corresponding track determined above may be only one of a plurality of track segments of the customer track corresponding to the receipt data group, it is possible to obtain additional track segments among the plurality of track segments of the customer track by performing a customer track correction operation. Figure 5 illustrates an exemplary flowchart of a customer track correction operation 500 according to an embodiment of the present disclosure. In operation S501, the candidate customer track set is updated by removing the corresponding track from the candidate customer track set. In operation S503, the sold item set is updated by removing an item matching the corresponding track from the sold item set. In operation S505, in the updated candidate customer track set, a track with a maximum location matching count with respect to locations of sold items in the updated sold item set is determined as a candidate matching track. In operation S507, a re-identification feature similarity S between the candidate matching track and the corresponding track is determined based on re-identification features. In operation S509, it is determined whether the re-identification feature similarity S is greater than a predetermined similarity threshold sTh. In operation S511, the candidate matching track is determined as another portion of the customer track corresponding to the receipt data group. In determining a location matching count of a current track, when a minimum distance from a display area of an item in a current sold item set to a current track is less than a predetermined distance threshold (e.g., the first distance threshold dTh1), the location matching count of the track is increased by 1. As such, it is possible to obtain a location matching count of each track in the candidate customer track set, so as to find a track with a largest location matching count therefrom as the candidate matching track. The re-identification feature similarity S between the candidate matching track and the corresponding track can be a cosine similarity between a representative re-recognition feature of the candidate matching track and a representative re-recognition feature of the corresponding track. A representative re-recognition feature of a track is a re-recognition feature of a representative image block in a corresponding tracklet (i.e., image block sequence) of the track. The representative image block can be determined based on a detection confidence level of a bounding box of the image block, an occlusion rate of the bounding box of the image block, and/or a ratio (height ratio) of a height of the bounding box to a height of a largest bounding box in the tracklet. An image block with a high detection confidence level, a low occlusion rate and a high height ratio in the tracklet can be selected as the representative image block.

In an embodiment, in determining a matching customer track corresponding to the receipt data group rdG[i], considering that the number of a plurality of segment tracks of the matching customer track may be more than 2, it is possible to repeatedly perform the customer track correction operation until no new track segments are added to the customer track. Specifically, the method 100 can further comprise: in the case where the re-identification feature similarity is greater than the predetermined similarity threshold, updating the corresponding track to the candidate matching track, and performing the customer track correction operation again; in a case where the similarity of the re-identification features is not greater than the predetermined similarity threshold, exiting the customer track correction operation.

The customer track correction operation can merge more tracks into a track of the same target, which is conducive to improving the accuracy of target tracking.

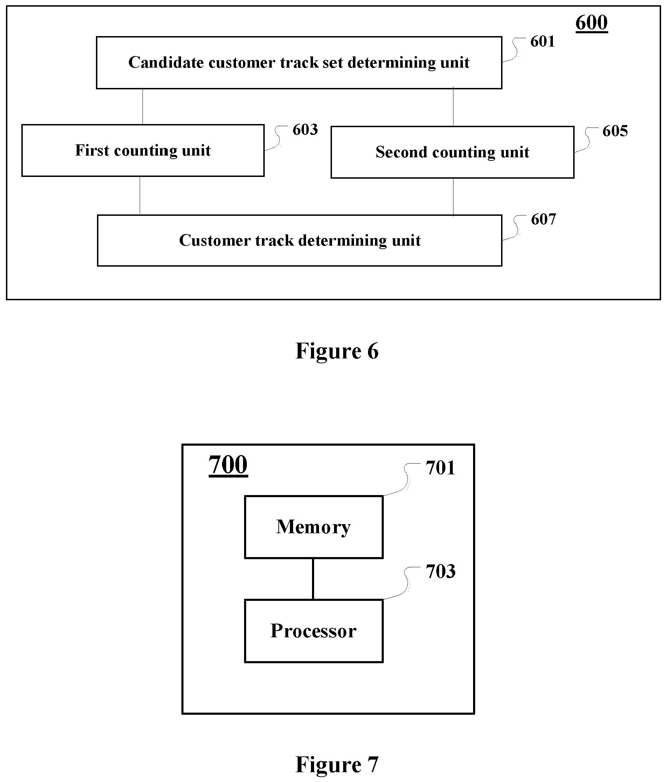

In an embodiment of the present disclosure, there is provided a device for processing a target track in target tracking. Exemplary description will be made with reference to Figure 6 below. Figure 6 illustrates an exemplary block diagram of a device 600 for processing a target track in target tracking according to an embodiment of the present disclosure. The device 600 comprises: a candidate customer track set determining unit 601, a first counting unit 603, a second counting unit 605, and a customer track determining unit 607. The candidate customer track set determining unit 601 is configured to: determine a candidate customer track set cTrs: cTr[ciStart]to cTr[ciEnd])of a receipt data group rdG[i] corresponding to one R[i] of a plurality of shopping receipts. The first counting unit 603 is configured to: for each track in the candidate customer track set, count the number of sold items matching the track in location in a sold item set Items (i.e., {Item[imStart],······, Item[imEnd]}) indicated by the receipt data group as a first location matching count Ct1 of the track. The second counting unit 605 is configured to: for each track in the candidate customer track set, count the number of sold items matching track points of interest in a set of track points of interest of the track in location in the sold item set Items as a second location matching count Ct2 of the track. A track point of interest included in the set of track points of interest of each track in the candidate customer track set is a track point indicating a location where a corresponding customer of the track shows interest in an item for sale displayed in an offline sales venue. The customer track determining unit 607 is configured to: determine a customer track corresponding to the receipt data group in the candidate customer track set based on first location matching counts and second location matching counts of a plurality of tracks in the candidate customer track set cTrs. The device 600 has a corresponding relationship with the method 100. For the further configuration of the device 600, reference may be made to the description of the method 100 of the present disclosure.

In an embodiment of the present disclosure, there is provided another device for multi-target multi-camera tracking. Exemplary description will be made with reference to Figure 7 below. Figure 7 illustrates an exemplary block diagram of a device 700 for processing a target track in target tracking according to an embodiment of the present disclosure. The device 700 comprises: a memory 701 storing instructions; and at least one processor 703 connected to the memory 701 and configured to execute the instructions on the memory 701 to: determine a candidate customer track set of a receipt data group corresponding to one of a plurality of shopping receipts; count, for each track in the candidate customer track set, the number of sold items matching the track in location in a sold item set indicated by the receipt data group, as a first location matching count of the track; count, for each track in the candidate customer track set, the number of sold items matching track points of interest in a set of track points of interest of the track in location in the sold item set, as a second location matching count of the track; and determine customer tracks corresponding to the receipt data group in the candidate customer track set based on first location matching counts and second location matching counts of a plurality of tracks in the candidate customer track set; wherein a track point of interest included in the set of track points of interest of each track in the candidate customer track set is a track point indicating a location where a corresponding customer of the track shows interest in an item for sale displayed in an offline sales venue. The instruction has a corresponding relationship with the method 100. For the further configuration situation of the device 700, reference may be made to the description of the method 100 of the present disclosure.

An aspect of the present disclosure provides a non-transitory computer-readable storage medium storing a program that, when executed by a computer, can implement the operations of: determining a candidate customer track set of a receipt data group corresponding to one of a plurality of shopping receipts; counting, for each track in the candidate customer track set, the number of sold items matching the track in location in a sold item set indicated by the receipt data group, as a first location matching count of the track; counting, for each track in the candidate customer track set, the number of sold items matching track points of interest in a set of track points of interest of the track in location in the sold item set, as a second location matching count of the track; and determining a customer track corresponding to the receipt data group in the candidate customer track set based on first location matching counts and second location matching counts of a plurality of tracks in the candidate customer track set; wherein a track point of interest included in the set of track points of interest of each track in the candidate customer track set is a track point indicating a location where a corresponding customer of the track shows interest in an item for sale displayed in an offline sales venue. The program has a corresponding relationship with the method 100. For the further configuration situation of the program, reference may be made to the description of the method 100 of the present disclosure.

According to an aspect of the present disclosure, there is further provided an information processing apparatus, which is used for processing a target track in target tracking.

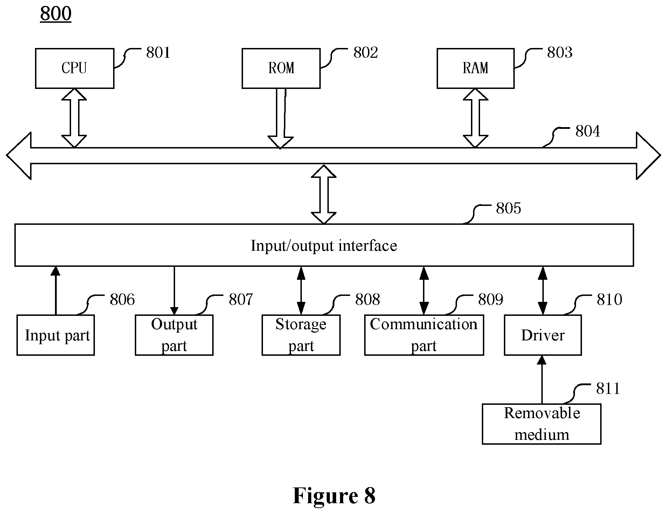

Figure 8 illustrates an exemplary block diagram of an information processing apparatus 800 according to an embodiment of the present disclosure. In Figure 8, a Central Processing Unit (CPU) 801 executes various processing according to programs stored in a Read-Only Memory (ROM) 802 or programs loaded from a storage device 808 to a Random Access Memory (RAM) 803. In the RAM 803, data needed when the CPU 801 executes various processing and the like is also stored as needed.

The CPU 801, the ROM 802 and the RAM 803 are connected to each other via a bus 904. An input/output interface 805 is also connected to the bus 804.

The following components are connected to the input/output interface 805: an input device 806, including a soft keyboard and the like; an output device 807, including a display such as a Liquid Crystal Display (LCD) and the like, as well as a speaker and the like; the storage device 808 such as a hard disc and the like; and a communication device 809, including a network interface card such as an LAN card, a modem and the like. The communication device 809 executes communication processing via a network such as the Internet, a local area network, a mobile network or a combination thereof.

A driver 810 is also connected to the input/output interface 805 as needed. A removable medium 811 such as a semiconductor memory and the like is installed on the driver 810 as needed, such that programs read therefrom are installed in the storage device 808 as needed.

The CPU 801 can run a program corresponding to a method for processing a target track in target tracking.

The beneficial effects of the methods, devices, and storage media of the present disclosure include at least one of: determining a customer track matching a shopping receipt data group; and, improving the accuracy of target tracking.

As described above, according to the present disclosure, the principle of determining a matching target track of a corresponding receipt data group of a shopping receipt has been disclosed. It should be noted that, the effects of the solution of the present disclosure are not necessarily limited to the above-mentioned effects, and in addition to or instead of the effects described in the preceding paragraphs, any of the effects as shown in the specification or other effects that can be understood from the specification can be obtained.

Although the present invention has been disclosed above through the description with regard to specific embodiments of the present invention, it should be understood that those skilled in the art can design various modifications (including, where feasible, combinations or substitutions of features between various embodiments), improvements, or equivalents to the present invention within the scope of the appended claims. These modifications, improvements or equivalents should also be considered to be included within the protection scope of the present invention.

It should be emphasized that, the term "comprise/include" as used herein refers to the presence of features, elements, operations or assemblies, but does not exclude the presence or addition of one or more other features, elements, operations or assemblies.

In addition, the methods of the various embodiments of the present invention are not limited to be executed in the time order as described in the specification or as shown in the accompanying drawings, and may also be executed in other time orders, in parallel or independently. Therefore, the execution order of the methods as described in the specification fails to constitute a limitation to the technical scope of the present invention.

### Appendix

The present disclosure includes but is not limited to the following solutions.
1. A method of processing a target track in target tracking, characterized by comprising:
   determining a candidate customer track set of a receipt data group corresponding to one of a plurality of shopping receipts;
   counting, for each track in the candidate customer track set, the number of sold items matching the track in location in a sold item set indicated by the receipt data group, as a first location matching count of the track;
   counting, for each track in the candidate customer track set, the number of sold items matching track points of interest in a set of track points of interest of the track in location in the sold item set, as a second location matching count of the track; and
   determining a customer track corresponding to the receipt data group in the candidate customer track set based on first location matching counts and second location matching counts of a plurality of tracks in the candidate customer track set;
   wherein a track point of interest included in the set of track points of interest of each track in the candidate customer track set is a track point indicating a location where a corresponding customer of the track shows interest in an item for sale displayed in an offline sales venue.
2. The method according to Appendix 1, wherein the receipt data group comprises electronic-point-of-sale data provided by an electronic point of sale system.
3. The method according to Appendix 1, wherein the receipt data group comprises an item name list that indicates purchased items of a customer and purchase time information.
4. The method according to Appendix 3, characterized by further comprising: determining, using a target tracking model, a customer track set comprising customer tracks in the offline sales venue; and
   determining the candidate customer track set from the customer track set based on the purchase time information included in the receipt data group.
5. The method according to Appendix 1, wherein for each track in the candidate customer track set, when a minimum distance from the track to a display area of one of sold items in the sold item set is less than a first distance threshold, the first location matching count of the track is increased by 1.
6. The method according to Appendix 1, wherein for each track in the candidate customer track set, when a minimum distance among distances from track points of interest in the set of track points of interest of the track to a display area of one of sold items in the sold item set is less than a second distance threshold, the second location matching count of the track is increased by 1.
7. The method according to Appendix 1, wherein when at least one of the following conditions is satisfied, a track point on a track in the candidate customer track set is regarded as a track point of interest on the track:
   Condition 1: a residence time length associated with the track point is greater than a first predetermined time length threshold; and
   Condition 2: a corresponding tracking image of the track point indicates that a customer associated with the track point has a motion of reaching out to the item for sale displayed in the offline sales venue.
8. The method according to Appendix 5, wherein the minimum distance minimum distance is a two-dimensional Euclidean distance.
9. The method according to Appendix 6, wherein the minimum distance minimum distance is a two-dimensional Euclidean distance.
10. The method according to Appendix 5, wherein the display area of one of the sold items indicated by the receipt data group is represented by two-dimensional coordinates of a representative point.
11. The method according to Appendix 6, wherein the display area of one of the sold items indicated by the receipt data group is represented by two-dimensional coordinates of a representative point.
12. The method according to Appendix 3, wherein the purchase time information comprises a corresponding real-time checkout time when the customer purchases each item in real time by self-service.
13. The method according to Appendix 12, wherein in counting the first location matching count, for a track point on the track which matches a sold item in the sold item set in location, the track point satisfies: a real-time checkout time of the sold item matches a residence time period of the track point; and
   wherein in counting the second location matching count, for a track point of interest in the set of track points of interest of the track which matches a sold item in the sold item set in location, the track point of interest satisfies: a real-time checkout time of the sold item matches a residence time period of the track point of interest.
14. The method according to Appendix 13, wherein the residence time period of the track point is represented by a representative time of the track point; and
   the residence time period of the track point of interest is represented by a representative time of the track point of interest.
15. The method according to Appendix 12, wherein in counting the first location matching count, for a track point on the track which matches a sold item in the sold item set in location, the track point satisfies: an absolute value of a difference between a real-time checkout time of the sold item and a representative time of the track point is less than a second predetermined time length threshold; and
   wherein in counting the second location matching count, for a track point of interest in the set of track points of interest of the track which matches a sold item in the sold item set in location, the track point of interest satisfies: an absolute value of a difference between a real-time checkout time of the sold item and a representative time of the track point of interest is less than the second predetermined time length threshold.
16. The method according to Appendix 1, wherein determining a customer track corresponding to the receipt data group in the candidate customer track set based on first location matching counts and second location matching counts of a plurality of tracks in the candidate customer track set comprises:
   determining a weighted sum of a first location matching count and a second location matching count for each track in the candidate customer track set;
   determining a maximum weighted sum of all weighted sums; and
   determining a corresponding track corresponding to the maximum weighted sum as a portion of the customer track corresponding to the receipt data group.
17. The method according to Appendix 16, characterized by further comprising performing a customer track correction operation, the customer track correction operation comprising:
   updating the candidate customer track set by removing the corresponding track from the candidate customer track set;
   updating the sold item set by removing an item matching the corresponding track from the sold item set;
   determining, in the updated candidate customer track set, a track with a maximum location matching count with respect to locations of sold items in the updated sold item set, as a candidate matching track;
   determining a re-identification feature similarity between the candidate matching track and the corresponding track based on re-identification features; and
   in a case where the re-identification feature similarity is greater than a predetermined similarity threshold, determining the candidate matching track as a portion of the customer track corresponding to the receipt data group.
18. The method according to Appendix 17, characterized by further comprising:
   in the case where the re-identification feature similarity is greater than the predetermined similarity threshold, updating the corresponding track to the candidate matching track, and performing the customer track correction operation again;
   in a case where the similarity of the re-identification features is not greater than the predetermined similarity threshold, exiting the customer track correction operation.
19. A device for processing a target track, characterized by comprising:
   a memory storing instructions; and
   at least one processor connected to the memory and configured to execute the instructions to:
      determine a candidate customer track set of a receipt data group corresponding to one of a plurality of shopping receipts;
      count, for each track in the candidate customer track set, the number of sold items matching the track in location in a sold item set indicated by the receipt data group, as a first location matching count of the track;
      count, for each track in the candidate customer track set, the number of sold items matching track points of interest in a set of track points of interest of the track in location in the sold item set, as a second location matching count of the track; and
      determine customer tracks corresponding to the receipt data group in the candidate customer track set based on first location matching counts and second location matching counts of a plurality of tracks in the candidate customer track set;
   wherein a track point of interest included in the set of track points of interest of each track in the candidate customer track set is a track point indicating a location where a corresponding customer of the track shows interest in an item for sale displayed in an offline sales venue.
20. A non-transitory computer-readable storage medium storing a program, wherein when the program is executed by a computer, the computer implements the operations of:
   determining a candidate customer track set of a receipt data group corresponding to one of a plurality of shopping receipts;
   counting, for each track in the candidate customer track set, the number of sold items matching the track in location in a sold item set indicated by the receipt data group, as a first location matching count of the track;
   counting, for each track in the candidate customer track set, the number of sold items matching track points of interest in a set of track points of interest of the track in location in the sold item set, as a second location matching count of the track; and
   determining a customer track corresponding to the receipt data group in the candidate customer track set based on first location matching counts and second location matching counts of a plurality of tracks in the candidate customer track set;
   wherein a track point of interest included in the set of track points of interest of each track in the candidate customer track set is a track point indicating a location where a corresponding customer of the track shows interest in an item for sale displayed in an offline sales venue.

## Claims

1. A method (200) of processing a target track in target tracking, **characterized by** comprising:
determining (S201) a candidate customer track set of a receipt data group corresponding to one of a plurality of shopping receipts;
counting (S203), for each track in the candidate customer track set, the number of sold items matching the track in location in a sold item set indicated by the receipt data group, as a first location matching count of the track;
counting (S205), for each track in the candidate customer track set, the number of sold items matching track points of interest in a set of track points of interest of the track in location in the sold item set, as a second location matching count of the track; and
determining (S207) a customer track corresponding to the receipt data group in the candidate customer track set based on first location matching counts and second location matching counts of a plurality of tracks in the candidate customer track set;
wherein a track point of interest included in the set of track points of interest of each track in the candidate customer track set is a track point indicating a location where a corresponding customer of the track shows interest in an item for sale displayed in an offline sales venue (100).

2. The method according to Claim 1, wherein the receipt data group comprises electronic-point-of-sale data provided by an electronic point of sale system.

3. The method according to Claim 1, wherein the receipt data group comprises an item name list that indicates purchased items of a customer and purchase time information.

4. The method according to Claim 3, **characterized by** further comprising: determining, using a target tracking model, a customer track set comprising customer tracks in the offline sales venue; and
determining the candidate customer track set from the customer track set based on the purchase time information included in the receipt data group.

5. The method according to Claim 1, wherein for each track in the candidate customer track set, when a minimum distance from the track to a display area of one of sold items in the sold item set is less than a first distance threshold, the first location matching count of the track is increased by 1.

6. The method according to Claim 1, wherein for each track in the candidate customer track set, when a minimum distance among distances from track points of interest in the set of track points of interest of the track to a display area of one of sold items in the sold item set is less than a second distance threshold, the second location matching count of the track is increased by 1.

7. The method according to Claim 1, wherein when at least one of the following conditions is satisfied, a track point on a track in the candidate customer track set is regarded as a track point of interest on the track:
Condition 1: a residence time length associated with the track point is greater than a first predetermined time length threshold; and
Condition 2: a corresponding tracking image of the track point indicates that a customer associated with the track point has a motion of reaching out to the item for sale displayed in the offline sales venue.

8. The method according to Claim 5, wherein the minimum distance minimum distance is a two-dimensional Euclidean distance.

9. The method according to Claim 3, wherein the purchase time information comprises a corresponding real-time checkout time when the customer purchases each item in real time by self-service.

10. The method according to Claim 9, wherein in counting the first location matching count, for a track point on the track which matches a sold item in the sold item set in location, the track point satisfies: a real-time checkout time of the sold item matches a residence time period of the track point; and
wherein in counting the second location matching count, for a track point of interest in the set of track points of interest of the track which matches a sold item in the sold item set in location, the track point of interest satisfies: a real-time checkout time of the sold item matches a residence time period of the track point of interest.

11. The method according to Claim 1, wherein determining a customer track corresponding to the receipt data group in the candidate customer track set based on first location matching counts and second location matching counts of a plurality of tracks in the candidate customer track set comprises:
determining a weighted sum of a first location matching count and a second location matching count for each track in the candidate customer track set;
determining a maximum weighted sum of all weighted sums; and
determining a corresponding track corresponding to the maximum weighted sum as a portion of the customer track corresponding to the receipt data group.

12. The method according to Claim 11, **characterized by** further comprising performing a customer track correction operation, the customer track correction operation comprising:
updating (S501) the candidate customer track set by removing the corresponding track from the candidate customer track set;
updating (S503) the sold item set by removing an item matching the corresponding track from the sold item set;
determining (S505), in the updated candidate customer track set, a track with a maximum location matching count with respect to locations of sold items in the updated sold item set, as a candidate matching track;
determining (S507) a re-identification feature similarity between the candidate matching track and the corresponding track based on re-identification features; and
in a case (S509) where the re-identification feature similarity is greater than a predetermined similarity threshold, determining (S511) the candidate matching track as a portion of the customer track corresponding to the receipt data group.

13. The method according to Claim 12, **characterized by** further comprising:
in the case where the re-identification feature similarity is greater than the predetermined similarity threshold, updating the corresponding track to the candidate matching track, and performing the customer track correction operation again;
in a case where the similarity of the re-identification features is not greater than the predetermined similarity threshold, exiting the customer track correction operation.

14. A device (700) for processing a target track, **characterized by** comprising:
a memory (701) storing instructions; and
at least one processor (703) connected to the memory and configured to execute the instructions to:
determine (S201) a candidate customer track set of a receipt data group corresponding to one of a plurality of shopping receipts;
count (S203), for each track in the candidate customer track set, the number of sold items matching the track in location in a sold item set indicated by the receipt data group, as a first location matching count of the track;
count (S205), for each track in the candidate customer track set, the number of sold items matching track points of interest in a set of track points of interest of the track in location in the sold item set, as a second location matching count of the track; and
determine (S207) customer tracks corresponding to the receipt data group in the candidate customer track set based on first location matching counts and second location matching counts of a plurality of tracks in the candidate customer track set;
wherein a track point of interest included in the set of track points of interest of each track in the candidate customer track set is a track point indicating a location where a corresponding customer of the track shows interest in an item for sale displayed in an offline sales venue (100).

15. A non-transitory computer-readable storage medium storing a program, wherein when the program is executed by a computer, the computer implements the operations of:
determining (S201) a candidate customer track set of a receipt data group corresponding to one of a plurality of shopping receipts;
counting (S203), for each track in the candidate customer track set, the number of sold items matching the track in location in a sold item set indicated by the receipt data group, as a first location matching count of the track;
counting (S205), for each track in the candidate customer track set, the number of sold items matching track points of interest in a set of track points of interest of the track in location in the sold item set, as a second location matching count of the track; and
determining (S207) a customer track corresponding to the receipt data group in the candidate customer track set based on first location matching counts and second location matching counts of a plurality of tracks in the candidate customer track set;
wherein a track point of interest included in the set of track points of interest of each track in the candidate customer track set is a track point indicating a location where a corresponding customer of the track shows interest in an item for sale displayed in an offline sales venue (100).
